# EUROPEAN PATENT APPLICATION

(11) **EP 4 851 679 A1**
(43) Date of publication of application: **09.12.2026**
(21) Application number: 25748286.9
(22) Date of filing: 22.01.2025
(51) Int. Cl.: G02B 1/04, C08F 2/48, C08F 20/10, G02C 7/02

(54) **PHOTOCURABLE RESIN COMPOSITION, CURED PRODUCT, OPTICAL MOLDED PRODUCT, AND OPTICAL DEVICE**

(30) Priority: 31.01.2024 JP 2024012864
(71) Applicant: Mitsui Chemicals, Inc., Tokyo 104-0028 (JP)
(72) Inventor: TATENO, Kotaro, Tokyo 104-0028 (JP); MIYAO, Hiroshi, Tokyo 104-0028 (JP); YAMAMOTO, Shingo, Tokyo 104-0028 (JP); NAGATA, Kei, Tokyo 104-0028 (JP)
(74) Representative: Hoffmann Eitle
(86) International application number: PCT/JP2025/001954
(87) International publication number: WO 2025/164478

(57) **Abstract**

Provided is a photocurable resin composition capable of being used for an optical molded body, the photocurable resin composition including a bifunctional or higher functional (meth)acrylate monomer, which includes one or two or more selected from the group consisting of an alicyclic bifunctional (meth)acrylate monomer and a linear bifunctional (meth)acrylate monomer, wherein, in a case where a total content of the bifunctional or higher functional (meth)acrylate monomer is set to 100 parts by mass, a total content of the alicyclic bifunctional (meth)acrylate monomer and the linear bifunctional (meth)acrylate monomer is 60 parts by mass or more and 100 parts by mass or less.

## Description

### TECHNICAL FIELD

The present invention relates to a photocurable resin composition, a cured product, an optical molded body, and an optical device.

### BACKGROUND ART

In recent years, from the viewpoint of heat resistance and low birefringence, a thermoplastic resin or an ultraviolet-curable resin composition has been studied for an optical system lens. Among these, a methacrylic resin composition which is a thermoplastic resin has been studied. Examples of the methacrylic resin composition include those described in Patent Document 1 and Patent Document 2.

Patent Document 1 discloses a methacrylic resin composition intended to provide high heat resistance, highly controlled birefringence, high light transmittance in a long optical path, and excellent color tone and transparency, the methacrylic resin composition including a methacrylic resin having at least a structural unit derived from an N-substituted maleimide monomer in a main chain, in which a glass transition temperature is higher than 120°C and 160°C or lower, a melt viscosity under conditions of a shear rate of 1,000 sec⁻¹ at a resin temperature of 270°C is 250 Pa·sec or less, an absolute value of a photoelastic coefficient is 1 × 10⁻¹² Pa⁻¹ or less, and in a solution obtained by dissolving the resin composition at 20 mass/volume% (w/v%) in chloroform, a light transmittance measured under conditions of an optical path length of 100 mm and a wavelength of 470 nm is 94% or more, and a light transmittance measured under conditions of a wavelength of 700 nm is 96% or more.

Patent Document 2 discloses a photocurable composition which is rapidly curable, is free from anaerobic curing, has low viscosity, has little odor, and has excellent storage stability, and that is intended to provide a photocurable composition in which a cured product obtained therefrom is excellent in properties required for lenses, such as colorless transparency, low optical distortion, heat resistance, low water absorption, toughness, and high hardness, a photocurable composition containing a tricyclodecane skeleton di(meth)acrylate (A), a trifunctional or tetrafunctional secondary thiol (B), a cleavage-type photopolymerization initiator (C), and a hindered phenol-based antioxidant (D), in which the photocurable composition does not contain a primary thiol, and a content ratio (weight ratio) of the components (A), (B), (C), and (D) is in the following range.
Component (A)/component (B) = 75/25 to 95/5
Component (C): 2 to 10 parts by weight with respect to 100 parts by weight of the total of components (A) and (B)
Component (D): 0.1 to 1 part by weight with respect to 100 parts by weight of the total of components (A) and (B)

### RELATED DOCUMENT

### PATENT DOCUMENT

Patent Document 1: Japanese Unexamined Patent Publication No. 2019-35015
Patent Document 2: Japanese Unexamined Patent Publication No. 2022-32186

### SUMMARY OF THE INVENTION

### TECHNICAL PROBLEM

The present invention provides a photocurable resin composition capable of reducing in-plane retardation of an optical molded body.

### SOLUTION TO PROBLEM

The present inventors conducted a thorough investigation in order to achieve the above-described object. As a result, the present inventors have found that the type of the bifunctional or higher functional (meth)acrylate monomer contained in the photocurable resin composition is related to an in-plane retardation Re of the obtained optical molded body. As a result of further intensive studies based on the above-described findings, the present inventors have found that, in a case where the total content of the bifunctional or higher functional (meth)acrylate monomer is set to 100 parts by mass, the in-plane retardation Re of the obtained optical molded body can be reduced by using a photocurable resin composition in which the total content of the alicyclic bifunctional (meth)acrylate monomer and the linear bifunctional (meth)acrylate monomer is 60 parts by mass or more and 100 parts by mass or less, thereby completing the present invention.
[1] A photocurable resin composition capable of being used for an optical molded body, the photocurable resin composition comprising:
   a bifunctional or higher functional (meth)acrylate monomer, which includes one or two or more selected from the group consisting of an alicyclic bifunctional (meth)acrylate monomer and a linear bifunctional (meth)acrylate monomer,
   wherein, in a case where a total content of the bifunctional or higher functional (meth)acrylate monomer is set to 100 parts by mass, a total content of the alicyclic bifunctional (meth)acrylate monomer and the linear bifunctional (meth)acrylate monomer is 60 parts by mass or more and 100 parts by mass or less.
[2] The photocurable resin composition according to [1], further comprising:
   one or two or more selected from the group consisting of a monofunctional (meth)acrylate monomer and the bifunctional or higher functional (meth)acrylate monomer,
   wherein, in a case where a total content of the monofunctional (meth)acrylate monomer and the bifunctional or higher functional (meth)acrylate monomer is set to 100 parts by mass, a content of the bifunctional or higher functional (meth)acrylate monomer is 5.0 parts by mass or more and 90 parts by mass or less.
[3] The photocurable resin composition according to [2], further comprising the monofunctional (meth)acrylate monomer.
[4] The photocurable resin composition according to [2] or [3],
   wherein the monofunctional (meth)acrylate monomer has an alicyclic skeleton.
[5] The photocurable resin composition according to any one of [1] to [4],
   wherein an in-plane retardation Re measured in a cured film produced using the photocurable resin composition according to the following <cured film preparation conditions> and measured according to the following <measurement of in-plane retardation Re> is 50.0 nm or less.

### <Cured film preparation conditions>

A 3 mm-thick silicone sheet (material: silicone rubber, hardness: 50 degrees) having a size of 50 mm × 50 mm and a circular hole with a diameter of 35 mmφ is placed on a 0.7 mm-thick alkali-free glass having a size of 50 mm × 50 mm, the circular hole portion is filled with the photocurable resin composition, a 0.7 mm-thick alkali-free glass having a size of 50 mm × 50 mm is further placed thereon, the laminate is placed on a stainless-steel lab jack and the height is adjusted, the photocurable resin composition is irradiated with LED light having a wavelength of 405 nm for 3 minutes under a condition of 810 mW from above the alkali-free glass, the laminate is turned over, the photocurable resin composition is irradiated with LED light having a wavelength of 405 nm for 3 minutes under a condition of 810 mW, the laminate is allowed to cool at 23°C for 30 minutes, and a cured product of the photocurable resin composition is released from the alkali-free glass and the silicone sheet to obtain a cured film of the photocurable resin composition.

### <Measurement of in-plane retardation Re>

With respect to the cured film, the in-plane retardation Re at a position of 10.0 mm from a center of the cured film is measured in an atmosphere at an ambient temperature of 23°C by a two-dimensional birefringence evaluation device 1 hour after the LED light irradiation is completed.

The photocurable resin composition according to any one of [1] to [5],
wherein a cured film prepared using the photocurable resin composition according to the following <cured film preparation conditions> is subjected to the following <heat treatment>, and an in-plane retardation Re after heating, measured according to the following <measurement of in-plane retardation Re after heat treatment>, is 16.0 nm or less.

### <Cured film preparation conditions>

A 3 mm-thick silicone sheet (material: silicone rubber, hardness: 50 degrees) having a size of 50 mm × 50 mm and a circular hole with a diameter of 35 mmφ is placed on a 0.7 mm-thick alkali-free glass having a size of 50 mm × 50 mm, the circular hole portion is filled with the photocurable resin composition, a 0.7 mm-thick alkali-free glass having a size of 50 mm × 50 mm is further placed thereon, the laminate is placed on a stainless-steel lab jack and the height is adjusted, the photocurable resin composition is irradiated with LED light having a wavelength of 405 nm for 3 minutes under a condition of 810 mW from above the alkali-free glass, the laminate is turned over, the photocurable resin composition is irradiated with LED light having a wavelength of 405 nm for 3 minutes under a condition of 810 mW, the laminate is allowed to cool at 23°C for 30 minutes, and a cured product of the photocurable resin composition is released from the alkali-free glass and the silicone sheet to obtain a cured film of the photocurable resin composition.

### <Heat treatment>

The cured film is heated from 23°C to 120°C at a constant rate for 1 hour, heated at 120°C for 1 hour, cooled from 120°C to 23°C at a constant rate for 3 hours, and further allowed to cool at 23°C for 3 hours.

### <Measurement of in-plane retardation Re after heat treatment>

With respect to the cured film, the in-plane retardation Re at a position of 10.0 mm from a center of the cured film is measured in an atmosphere at an ambient temperature of 23°C by a two-dimensional birefringence evaluation device 1 hour after the <heat treatment> is completed.

The photocurable resin composition according to any one of [1] to [6], further comprising an antioxidant.

The photocurable resin composition according to any one of [1] to [7], further comprising a photopolymerization initiator.

The photocurable resin composition according to [8],
wherein the photopolymerization initiator includes a photoradical polymerization initiator.

The photocurable resin composition according to any one of [1] to [9], further comprising a light stabilizer.

The photocurable resin composition according to any one of [1] to [10],
wherein the photocurable resin composition is capable of being used in a casting method.

The photocurable resin composition according to any one of [1] to [11],
wherein the photocurable resin composition is capable of being used for one or two or more lenses selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

A cured product of the photocurable resin composition according to any one of [1] to [12].

An optical molded body comprising a cured product of the photocurable resin composition according to any one of [1] to [12].

The optical molded body according to [14], wherein the optical molded body includes a lens.

The optical molded body according to [15],
wherein the lens includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The optical molded body according to any one of [14] to [16],
wherein a maximum thickness portion is 20.0 mm or less.

The optical molded body according to any one of [14] to [17],
wherein a maximum thickness portion is 1.0 mm or more.

An optical device comprising the optical molded body according to any one of [14] to [18].

### ADVANTAGEOUS EFFECTS OF INVENTION

According to the present invention, it is possible to provide a photocurable resin composition capable of reducing in-plane retardation of an optical molded body.

### DESCRIPTION OF EMBODIMENTS

The notation of "(meth)acrylate" in the present specification represents a concept including both acrylate and methacrylate. The same applies to similar notations such as "(meth)acryloyl".

Each component of the present embodiment may be used alone or in combination of two or more kinds thereof. In addition, "to" representing a numerical range represents "or more" and "or less", and includes both the upper limit value and the lower limit value.

### (Photocurable resin composition)

A photocurable resin composition of the present embodiment (hereinafter, also simply referred to as a "resin composition" as appropriate) is capable of being used for an optical molded body, the photocurable resin composition includes a bifunctional or higher functional (meth)acrylate monomer (A2), which includes one or two or more selected from the group consisting of an alicyclic bifunctional (meth)acrylate monomer and a linear bifunctional (meth)acrylate monomer, and, in a case where a total content of the bifunctional or higher functional (meth)acrylate monomer (A2) is set to 100 parts by mass, a total content of the alicyclic bifunctional (meth)acrylate monomer and the linear bifunctional (meth)acrylate monomer is 60 parts by mass or more and 100 parts by mass or less.

The photocurable resin composition of the present embodiment has the above-described configuration, and thus can reduce in-plane retardation of the optical molded body.

The photocurable resin composition contains a polymerizable compound. From the viewpoint of reducing coloration of the optical molded body, the polymerizable compound includes a bifunctional or higher functional (meth)acrylate monomer (A2). The bifunctional or higher functional (meth)acrylate monomer (A2) includes one or two or more selected from the group consisting of an alicyclic bifunctional (meth)acrylate monomer and a linear bifunctional (meth)acrylate monomer.

The properties of the photocurable resin composition are not particularly limited. However, from the viewpoint of suitability for forming an optical molded body by molding using an injection method or a casting method, the photocurable resin composition is preferably in a liquid state.

In addition, from the viewpoint of improving a degree of freedom in designing the optical molded body, the photocurable resin composition is preferably used for molding by a casting method.

Next, specific examples of the constitutional components of the photocurable resin composition will be described.

The photocurable resin composition may be composed of a polymerizable compound, or may contain a component other than the polymerizable compound. The photocurable resin composition may contain one or two or more selected from the group consisting of an antioxidant (B), a photopolymerization initiator (C), and a light stabilizer (D), which will be described later, as specific examples of other components.

From the viewpoint of further reducing the in-plane retardation of the optical molded body, the bifunctional or higher functional (meth)acrylate monomer (A2) preferably includes a bifunctional or higher functional methacrylate monomer.

From the viewpoint of further reducing the in-plane retardation of the optical molded body, the polymerizable compound preferably includes a monofunctional (meth)acrylate monomer (A1), and more preferably includes a monofunctional methacrylate monomer.

From the viewpoint of further reducing the in-plane retardation of the optical molded body, in a case where the total content of the monofunctional (meth)acrylate monomer (A1) and the bifunctional or higher functional (meth)acrylate monomer (A2) is set to 100 parts by mass, the content of the bifunctional or higher functional (meth)acrylate monomer (A2) in the photocurable resin composition according to the present embodiment is preferably 5.0 parts by mass or more and 90 parts by mass or less, more preferably 10 parts by mass or more and 70 parts by mass or less, still more preferably 12 parts by mass or more and 50 parts by mass or less, even still more preferably 15 parts by mass or more and 40 parts by mass or less, and even still more preferably 18 parts by mass or more and 35 parts by mass or less.

From the viewpoint of further reducing the in-plane retardation of the optical molded body, the mass ratio of the content of the monofunctional (meth)acrylate monomer (A1) to the content of the bifunctional or higher functional (meth)acrylate monomer (A2) in the photocurable resin composition according to the present embodiment is preferably 0.50 or more and 10.0 or less, more preferably 1.00 or more and 8.00 or less, still more preferably 1.50 or more and 6.00 or less, even still more preferably 1.80 or more and 5.00 or less, and even still more preferably 2.00 or more and 4.50 or less.

From the viewpoint of further reducing the in-plane retardation of the optical molded body, in a case where the total content of the (meth)acrylate monomer (A) is set to 100 parts by mass, the total content of the (meth)acrylate monomer (A) excluding the (meth)acrylate monomer (A) having an aromatic ring in the photocurable resin composition according to the present embodiment is preferably 60 parts by mass or more and 100 parts by mass or less, more preferably 70 parts by mass or more and 100 parts by mass or less, still more preferably 80 parts by mass or more and 100 parts by mass or less, even still more preferably 85 parts by mass or more and 100 parts by mass or less, even still more preferably 90 parts by mass or more and 100 parts by mass or less, and even still more preferably 95 parts by mass or more and 100 parts by mass or less.

From the viewpoint of further reducing the in-plane retardation of the optical molded body, in a case where the total content of the (meth)acrylate monomer (A) is set to 100 parts by mass, the total content of the (meth)acrylate monomer (A) excluding the (meth)acrylate monomer (A) having a branched chain in the photocurable resin composition according to the present embodiment is preferably 60 parts by mass or more and 100 parts by mass or less, more preferably 70 parts by mass or more and 100 parts by mass or less, still more preferably 80 parts by mass or more and 100 parts by mass or less, even still more preferably 85 parts by mass or more and 100 parts by mass or less, even still more preferably 90 parts by mass or more and 100 parts by mass or less, and even still more preferably 95 parts by mass or more and 100 parts by mass or less.

From the viewpoint of further reducing the in-plane retardation of the optical molded body, in a case where the total content of the (meth)acrylate monomer (A) is set to 100 parts by mass, the total content of the monofunctional (meth)acrylate monomer (A1) excluding the aromatic ring monofunctional (meth)acrylate monomer in the photocurable resin composition according to the present embodiment is preferably 10 parts by mass or more and 100 parts by mass or less, more preferably 30 parts by mass or more and 95 parts by mass or less, still more preferably 40 parts by mass or more and 90 parts by mass or less, even still more preferably 50 parts by mass or more and 90 parts by mass or less, and even still more preferably 60 parts by mass or more and 90 parts by mass or less.

### <Monofunctional (meth)acrylate monomer (A1)>

The monofunctional (meth)acrylate monomer (A1) includes, for example, one or two or more selected from the group consisting of an aromatic ring monofunctional (meth)acrylate; an alicyclic monofunctional (meth)acrylate; a chain (or chain-type) monofunctional (meth)acrylate such as a linear monofunctional (meth)acrylate (for example, including a monofunctional (meth)acrylate monomer having a linear hydrocarbon skeleton) and a monofunctional (meth)acrylate having a branched chain.

The monofunctional (meth)acrylate monomer (A1) preferably includes one or two or more selected from the group consisting of isobornyl (meth)acrylate, dicyclopentanyl (meth)acrylate (for example, GM81HDA, manufactured by Qualipoly Chemical Corporation), 3,3,5-trimethylcyclohexyl (meth)acrylate, 4-tert-butylcyclohexyl (meth)acrylate, dicyclopentenyl (meth)acrylate (for example, FA-511AS, manufactured by Hitachi Chemical Co., Ltd.), dicyclopentenyloxyethyl (meth)acrylate, tetrahydrofurfuryl (meth)acrylate, 2-hydroxyethyl (meth)acrylate, 4-hydroxybutyl (meth)acrylate, isobutyl (meth)acrylate, t-butyl (meth)acrylate, isooctyl (meth)acrylate, 2-methoxyethyl (meth)acrylate, methoxytriethylene glycol (meth)acrylate, 2-ethoxyethyl (meth)acrylate, 3-methoxybutyl (meth)acrylate, ethoxyethyl (meth)acrylate, butoxyethyl (meth)acrylate, ethoxydiethylene glycol (meth)acrylate, methoxydihexylethyl (meth)acrylate, ethyldiglycol (meth)acrylate, cyclic trimethylolpropane formal mono(meth)acrylate, imide (meth)acrylate, isoamyl (meth)acrylate, ethoxylated succinic acid (meth)acrylate, trifluoroethyl (meth)acrylate, ω-carboxypolycaprolactone mono(meth)acrylate, cyclohexyl (meth)acrylate, 2-(2-ethoxyethoxy)ethyl (meth)acrylate, stearyl (meth)acrylate, isostearyl (meth)acrylate (for example, S-1800A, manufactured by Shin-Nakamura Chemical Co., Ltd.), diethylene glycol monobutyl ether (meth)acrylate, lauryl (meth)acrylate (for example, LA, manufactured by OSAKA ORGANIC CHEMICAL INDUSTRY LTD.), isodecyl (meth)acrylate, octyl/decyl (meth)acrylate, tridecyl (meth)acrylate, caprolactone (meth)acrylate, ethoxylated (4) nonylphenol (meth)acrylate, methoxypolyethylene glycol (350) mono(meth)acrylate, methoxypolyethylene glycol (550) mono(meth)acrylate, phenoxyethyl (meth)acrylate, benzyl (meth)acrylate, methylphenoxyethyl (meth)acrylate, caprolactone-modified tetrahydrofurfuryl (meth)acrylate, tribromophenyl (meth)acrylate, ethoxylated tribromophenyl (meth)acrylate, 2-phenoxyethyl (meth)acrylate, an ethylene oxide adduct of 2-phenoxyethyl (meth)acrylate, a propylene oxide adduct of 2-phenoxyethyl (meth)acrylate, phenoxydiethylene glycol (meth)acrylate, 2-hydroxy-3-phenoxypropyl (meth)acrylate, 3-methacryloyloxymethylcyclohexene oxide, 3-(meth)acryloyloxymethylcyclohexene oxide, ethoxylated-o-phenylphenol (meth)acrylate (for example, A-LEN-10, manufactured by Shin-Nakamura Chemical Co., Ltd.), 2-methacryloyloxy-2-methyladamantane, and 2-methacryloyloxy-2-ethyladamantane.

From the viewpoint of further reducing the in-plane retardation of the optical molded body, the monofunctional (meth)acrylate monomer (A1) preferably includes one or two or more selected from the group consisting of lauryl (meth)acrylate and dicyclopentanyl (meth)acrylate.

From the viewpoint of further reducing the in-plane retardation of the optical molded body, the monofunctional (meth)acrylate monomer (A1) preferably has an alicyclic skeleton. From the viewpoint of further reducing the in-plane retardation of the optical molded body, the monofunctional (meth)acrylate monomer (A1) more preferably includes dicyclopentanyl (meth)acrylate, and still more preferably includes dicyclopentanyl methacrylate.

### <Bifunctional or higher functional (meth)acrylate monomer (A2)>

From the viewpoint of reducing the in-plane retardation of the optical molded body, the bifunctional or higher functional (meth)acrylate monomer (A2) includes one or two or more selected from the group consisting of an alicyclic bifunctional (meth)acrylate monomer and a linear bifunctional (meth)acrylate monomer. From the viewpoint of further reducing the in-plane retardation of the optical molded body, the bifunctional or higher functional methacrylate monomer (A2) preferably includes one or two or more selected from the group consisting of an alicyclic bifunctional methacrylate monomer and a linear bifunctional methacrylate monomer.

From the viewpoint of reducing the in-plane retardation of the optical molded body, in a case where the total content of the bifunctional or higher functional (meth)acrylate monomer (A2) is set to 100 parts by mass, the total content of the alicyclic bifunctional (meth)acrylate monomer and the linear bifunctional (meth)acrylate monomer in the photocurable resin composition according to the present embodiment is 60 parts by mass or more and 100 parts by mass or less, preferably 70 parts by mass or more and 100 parts by mass or less, more preferably 80 parts by mass or more and 100 parts by mass or less, still more preferably 85 parts by mass or more and 100 parts by mass or less, even still more preferably 90 parts by mass or more and 100 parts by mass or less, and even still more preferably 95 parts by mass or more and 100 parts by mass or less.

The alicyclic bifunctional (meth)acrylate monomer is a bifunctional (meth)acrylate monomer having an alicyclic hydrocarbon structure in the molecular structure. From the viewpoint of improving heat resistance, the number of carbon atoms in the alicyclic hydrocarbon structure is preferably 4 or more and 14 or less, more preferably 5 or more and 12 or less, and still more preferably 6 or more and 10 or less.

The alicyclic hydrocarbon structure may be a saturated hydrocarbon structure or an unsaturated hydrocarbon structure. From the viewpoint of improving heat resistance, the alicyclic hydrocarbon structure is preferably a saturated hydrocarbon structure.

In addition, the alicyclic hydrocarbon structure may be a monocyclic hydrocarbon structure, or may be a polycyclic hydrocarbon structure such as a condensed ring-type hydrocarbon structure or a bridged hydrocarbon structure. The alicyclic bifunctional (meth)acrylate monomer may include a group having the alicyclic hydrocarbon structure in the molecular structure, and preferably includes a divalent group having the alicyclic hydrocarbon structure.

Specific examples of the monocyclic hydrocarbon group include a group having a cycloalkane structure, such as a cyclohexylene group and a cyclohexyl group; and a group having a cycloalkene skeleton, such as a cyclodecatrienediyl group and a cyclodecatrienyl group.

Specific examples of the polycyclic hydrocarbon group include a group having a dicyclopentadiene skeleton, such as a tricyclodecane diyl group, a dicyclopentanyl group, and a dicyclopentenyl group; a group having a norbornane skeleton, such as a norbornane diyl group, an isobornane diyl group, a norbornyl group, and an isobornyl group; and a group having an adamantane skeleton, such as an adamantane diyl group and an adamantyl group.

From the viewpoint of further reducing the coloration of the optical molded body, the cyclic hydrocarbon group in the alicyclic bifunctional (meth)acrylate monomer is preferably a group having a dicyclopentadiene skeleton.

In addition, from the viewpoint of reducing the curing shrinkage during the molding of the optical molded body, the alicyclic bifunctional (meth)acrylate monomer preferably includes tricyclodecane dimethanol di(meth)acrylate, more preferably is tricyclodecane dimethanol di(meth)acrylate, and still more preferably is tricyclodecane dimethanol dimethacrylate (for example, DCP, manufactured by Shin-Nakamura Chemical Co., Ltd.).

The linear bifunctional (meth)acrylate monomer is a (meth)acrylate having a linear structure in the molecular structure and having two (meth)acryloyl groups.

From the viewpoint of improving the crack resistance during the molding of the optical molded body, the linear structure preferably includes a divalent linear hydrocarbon group. From the viewpoint of reducing the deviation in the amount of liquid due to the volatilization of the monomer during the molding of the optical molded body, the number of carbon atoms in the divalent linear hydrocarbon group is, for example, 1 or more, preferably 2 or more, and more preferably 4 or more. In addition, from the viewpoint of improving heat resistance, the number of carbon atoms in the divalent linear hydrocarbon group is preferably 20 or less, and more preferably 14 or less.

Specific examples of the linear bifunctional (meth)acrylate monomer include a di(meth)acrylate of an alkanediol.

The linear bifunctional (meth)acrylate monomer preferably includes one or two or more selected from the group consisting of 1,6-hexanediol di(meth)acrylate (for example, A-HD-N, manufactured by Shin-Nakamura Chemical Co., Ltd.; HD-N, manufactured by Shin-Nakamura Chemical Co., Ltd.), 1,9-nonanediol di(meth)acrylate (for example, A-NOD-N, manufactured by Shin-Nakamura Chemical Co., Ltd.; Light Acrylate 1,9ND-A, manufactured by KYOEISHA CHEMICAL Co., Ltd.; NOD-N, manufactured by Shin-Nakamura Chemical Co., Ltd.; Light Acrylate 1,9-ND-M, manufactured by KYOEISHA CHEMICAL Co., Ltd.), 1,10-decanediol di(meth)acrylate (for example, A-DOD-N, manufactured by Shin-Nakamura Chemical Co., Ltd.; DOD-N, manufactured by Shin-Nakamura Chemical Co., Ltd.), 1,12-dodecanediol di(meth)acrylate (for example, DDD, manufactured by Shin-Nakamura Chemical Co., Ltd.; SR262, manufactured by Arkema S.A.), ethylene glycol di(meth)acrylate (for example, SR206NS, manufactured by Arkema S.A.), triethylene glycol di(meth) acrylate (for example, SR272, manufactured by Arkema S.A.), polyethylene glycol di(meth)acrylate (for example, A-400, manufactured by Shin-Nakamura Chemical Co., Ltd.), 1,3-butanediol di(meth)acrylate (for example, BG, manufactured by Shin-Nakamura Chemical Co., Ltd.), and 1,4-butanediol di(meth)acrylate (for example, BD, manufactured by Shin-Nakamura Chemical Co., Ltd.).

From the viewpoint of reducing the cracks generated in the optical molded body, the linear bifunctional (meth)acrylate monomer more preferably includes one or two or more (meth)acrylates selected from the group consisting of 1,12-dodecanediol di(meth)acrylate and 1,9-nonanediol di(meth)acrylate.

From the viewpoint of further reducing the coloration of the optical molded body, the bifunctional or higher functional (meth)acrylate monomer (A2) preferably has an alicyclic skeleton. From the viewpoint of further reducing the coloration of the optical molded body, the bifunctional or higher functional (meth)acrylate monomer (A2) more preferably includes tricyclodecane dimethanol di(meth)acrylate, and still more preferably includes tricyclodecane dimethanol dimethacrylate.

From the viewpoint of further reducing the coloration of the optical molded body, the bifunctional or higher functional (meth)acrylate monomer (A2) preferably has a linear hydrocarbon skeleton. From the viewpoint of further reducing the coloration of the optical molded body, the bifunctional or higher functional (meth)acrylate monomer (A2) more preferably includes 1,12-dodecanediol di(meth)acrylate, and still more preferably includes 1,12-dodecanediol dimethacrylate.

The bifunctional or higher functional (meth)acrylate monomer (A2) may include a bifunctional or higher functional (meth)acrylate monomer (A2) other than the linear bifunctional (meth)acrylate monomer and the alicyclic bifunctional (meth)acrylate monomer. The bifunctional or higher functional (meth)acrylate monomer (A2) may include, for example, a trifunctional or higher functional (meth)acrylate monomer.

The bifunctional or higher functional (meth)acrylate monomer (A2) may include, for example, one or two or more selected from the group consisting of a bifunctional or higher functional (meth)acrylate monomer (A2) having an aromatic ring and a bifunctional or higher functional (meth)acrylate monomer (A2) having a branched chain. In addition, the bifunctional or higher functional (meth)acrylate monomer (A2) may include, for example, one or two or more selected from the group consisting of an aromatic ring bifunctional (meth)acrylate monomer and a branched chain bifunctional (meth)acrylate monomer. The aromatic ring bifunctional (meth)acrylate monomer is a (meth)acrylate having an aromatic ring in the molecular structure and having two (meth)acryloyl groups. The branched chain bifunctional (meth)acrylate monomer is a (meth)acrylate having a branched chain structure in the molecular structure and having two (meth)acryloyl groups.

From the viewpoint of further reducing the in-plane retardation of the optical molded body, in a case where the total content of the bifunctional or higher functional (meth)acrylate monomer (A2) is set to 100 parts by mass, the total content of the bifunctional or higher functional (meth)acrylate monomers (A2) excluding the bifunctional or higher functional (meth)acrylate monomer (A2) having an aromatic ring in the photocurable resin composition according to the present embodiment is preferably 60 parts by mass or more and 100 parts by mass or less, more preferably 70 parts by mass or more and 100 parts by mass or less, still more preferably 80 parts by mass or more and 100 parts by mass or less, even still more preferably 85 parts by mass or more and 100 parts by mass or less, even still more preferably 90 parts by mass or more and 100 parts by mass or less, and even still more preferably 95 parts by mass or more and 100 parts by mass or less.

From the viewpoint of further reducing the in-plane retardation of the optical molded body, in a case where the total content of the bifunctional or higher functional (meth)acrylate monomer (A2) is set to 100 parts by mass, the total content of the bifunctional or higher functional (meth)acrylate monomers (A2) excluding the bifunctional or higher functional (meth)acrylate monomer (A2) having a branched chain in the photocurable resin composition according to the present embodiment is preferably 60 parts by mass or more and 100 parts by mass or less, more preferably 70 parts by mass or more and 100 parts by mass or less, still more preferably 80 parts by mass or more and 100 parts by mass or less, even still more preferably 85 parts by mass or more and 100 parts by mass or less, even still more preferably 90 parts by mass or more and 100 parts by mass or less, and even still more preferably 95 parts by mass or more and 100 parts by mass or less.

### <Antioxidant (B)>

The photocurable resin composition according to the present embodiment may further contain an antioxidant (B). The antioxidant (B) is not particularly limited, and a known antioxidant can be used. The antioxidant (B) includes, for example, one or two or more selected from the group consisting of a phenol-based antioxidant, a phosphorus-based antioxidant, a sulfur-based antioxidant, a hindered amine-based antioxidant, and a thioether-based antioxidant.

Examples of the phenol-based antioxidant include 2,6-di-t-butylhydroxytoluene and pentaerythritol tetrakis[3-(3,5-di-tert-butyl-4-hydroxyphenyl)propionate].

Examples of a commercially available product of the phenol-based antioxidant include ADEKA STAB series AO-20, AO-30, AO-40, AO-50, AO-60, and AO-80 manufactured by ADEKA Corporation.

Examples of the phosphorus-based antioxidant include phosphines such as trialkylphosphine and triarylphosphine, trialkyl phosphite, and triaryl phosphite.

Examples of a commercially available product of the phosphorus-based antioxidant include ADEKA STAB series PEP-4C, PEP-8, PEP-24G, PEP-36, HP-10, 260, 522A, 329K, 1178, 1500, 135A, and 3010 manufactured by ADEKA Corporation.

Examples of sulfur-based antioxidant include dilauryl 3,3-thiodipropionate, dimyristyl 3,3'-thiodipropionate, distearyl 3,3-thiodipropionate, lauryl stearyl 3,3-thiodipropionate, pentaerythritol-tetrakis-(β-lauryl-thio-propionate), 3,9-bis(2-dodecylthioethyl)-2,4,8,10-tetraoxaspiro[5,5]undecane, and the like.

Examples of the hindered amine-based antioxidant include bis(1,2,2,6,6-pentamethyl-4-piperidinyl)sebacate, methyl(1,2,2,6,6-pentamethyl-4-piperidinyl)sebacate, 2,4-bis[N-butyl-N-(1-cyclohexyloxy-2,2,6,6-tetramethylpiperidine-4-yl)amino]-6-(2-hydroxyethylamino)-1,3,5-triazine, decanedioic acid bis(2,2,6,6-tetramethyl-1-(octyloxy)-4-piperidinyl)ester, sebacic acid bis(1,2,2,6,6-pentamethyl-4-piperidyl), and the like.

Examples of a commercially available product of the hindered amine-based antioxidant include hindered amine-based antioxidants such as ADEKA STAB series AL-72 manufactured by ADEKA Corporation and TINUVIN series 111FDL, 123, 144, 152, 292, and 5100 manufactured by BASF.

Examples of the thioether-based antioxidant include 3,3'-thiobispropionic acid ditridecyl and bis[3-(dodecylthio)propionic acid] 2,2-bis[[3-(dodecylthio)-1-oxopropyloxy]methyl]-1,3-propanediyl.

Examples of a commercially available product of the thioether-based antioxidant include ADEKA STAB series AO-26, AO-412S, and AO-503A manufactured by ADEKA Corporation.

From the viewpoint of reducing the coloration of the optical molded body, the antioxidant (B) preferably includes one or two or more selected from the group consisting of a phenol-based antioxidant and a thioether-based antioxidant. From the viewpoint of further reducing the coloration of the optical molded body, the antioxidant (B) more preferably includes one or two or more selected from the group consisting of bis[3-(dodecylthio)propionic acid] 2,2-bis[[3-(dodecylthio)-1-oxopropyloxy]methyl]-1,3-propanediyl (for example, ADEKA STAB AO-412S, manufactured by ADEKA Corporation) and pentaerythritol tetrakis[3-(3,5-di-tert-butyl-4-hydroxyphenyl)propionate] (for example, ADEKA STAB AO-60, manufactured by ADEKA Corporation).

From the viewpoint of reducing the coloration of the optical molded body, in a case where the total content of the monofunctional (meth)acrylate monomer (A1) and the bifunctional or higher functional (meth)acrylate monomer (A2) is set to 100 parts by mass, the content of the antioxidant (B) in the photocurable resin composition according to the present embodiment is preferably 0.010 parts by mass or more and 10 parts by mass or less, more preferably 0.050 parts by mass or more and 5.0 parts by mass or less, still more preferably 0.10 parts by mass or more and 3.0 parts by mass or less, even still more preferably 0.20 parts by mass or more and 2.0 parts by mass or less, and even still more preferably 0.50 parts by mass or more and 1.5 parts by mass or less.

From the viewpoint of reducing the coloration of the optical molded body, in a case where the total amount of solid contents in the photocurable resin composition (the total amount of components remaining as solid substances in a case of being cured into a cured product) is set to 100% by mass, the content of the antioxidant (B) in the photocurable resin composition according to the present embodiment is preferably 0.010% by mass or more and 5.0% by mass or less, more preferably 0.050% by mass or more and 4.0% by mass or less, still more preferably 0.10% by mass or more and 3.0% by mass or less, even still more preferably 0.50% by mass or more and 2.0% by mass or less, and even still more preferably 0.90% by mass or more and 1.0% by mass or less.

### <Photopolymerization initiator (C)>

The photocurable resin composition of the present embodiment may further contain a photopolymerization initiator (C). The photopolymerization initiator (C) is not particularly limited, and a known polymerization initiator can be used.

From the viewpoint of stably forming the optical molded body at a low temperature, the photopolymerization initiator (C) preferably includes a photoradical polymerization initiator. The photoradical polymerization initiator is a compound that generates a radical upon irradiation with ultraviolet rays or visible light.

Examples of the photoradical polymerization initiator include an acylphosphine oxide-based initiator, an oxyphenylacetic acid ester-based initiator, a benzoylformic acid-based initiator, and a hydroxyphenyl ketone-based initiator.

Examples of the photopolymerization initiator (C) include benzophenone, Michler's ketone, 4,4'-bis(diethylamino)benzophenone, xanthone, thioxanthone, isopropylxanthone, 2,4-diethylthioxanthone, 2-ethylanthraquinone, acetophenone, 2-hydroxy-2-methyl-4'-isopropylpropionophenone, isopropylbenzoin ether, isobutylbenzoin ether, 2,2-diethoxyacetophenone, 2,2-dimethoxy-2-phenylacetophenone, camphorquinone, benzanthrone, ethyl 4-dimethylaminobenzoate, isoamyl 4-dimethylaminobenzoate, 4,4'-di(t-butylperoxycarbonyl)benzophenone, 3,4,4'-tri(t-butylperoxycarbonyl)benzophenone, 3,3',4,4'-tetra(t-butylperoxycarbonyl)benzophenone, 3,3',4,4'-tetra(t-hexylperoxycarbonyl)benzophenone, 3,3'-di(methoxycarbonyl)-4,4'-di(t-butylperoxycarbonyl)benzophenone, 3,4'-di(methoxycarbonyl)-4,3'-di(t-butylperoxycarbonyl)benzophenone, 4,4'-di(methoxycarbonyl)-3,3'-di(t-butylperoxycarbonyl)benzophenone, 2-(4'-methoxystyryl)-4,6-bis(trichloromethyl)-s-triazine, 2-(3',4'-dimethoxystyryl)-4,6-bis(trichloromethyl)-s-triazine, 2-(2',4'-dimethoxystyryl)-4,6-bis(trichloromethyl)-s-triazine, 2-(2'-methoxystyryl)-4,6-bis(trichloromethyl)-s-triazine, 2-(4'-pentyloxystyryl)-4,6-bis(trichloromethyl)-s-triazine, 4-[p-N,N-di(ethoxycarbonylmethyl)]-2,6-di(trichloromethyl)-s-triazine, 1,3-bis(trichloromethyl)-5-(2'-chlorophenyl)-s-triazine, 1,3-bis(trichloromethyl)-5-(4'-methoxyphenyl)-s-triazine, 2-(p-dimethylaminostyryl)benzoxazole, 2-(p-dimethylaminostyryl)benzothiazole, 2-mercaptobenzothiazole, 3,3'-carbonylbis(7-diethylaminocoumarin), 2-(o-chlorophenyl)-4,4',5,5'-tetraphenyl-1,2'-biimidazole, 2,2'-bis(2-chlorophenyl)-4,4',5,5'-tetrakis(4-ethoxycarbonylphenyl)-1,2'-biimidazole, 2,2'-bis(2,4-dichlorophenyl)-4,4',5,5'-tetraphenyl-1,2'-biimidazole, 2,2'-bis(2,4-dibromophenyl)-4,4',5,5'-tetraphenyl-1,2'-biimidazole, 2,2'-bis(2,4,6-trichlorophenyl)-4,4',5,5'-tetraphenyl-1,2'-biimidazole, 3-(2-methyl-2-dimethylaminopropionyl)carbazole, 3,6-bis(2-methyl-2-morpholinopropionyl)-9-n-dodecylcarbazole, bis(η5-2,4-cyclopentadiene-1-yl)-bis(2,6-difluoro-3-(1H-pyrrole-1-yl)-phenyl) titanium, 1-hydroxycyclohexylphenyl ketone, 2-hydroxy-2-methyl-1-phenyl-1-propanone, 1-[4-(2-hydroxyethoxy)-phenyl]-2-hydroxy-2-methyl-1-propanone, 2-hydroxy-1-{4-[4-(2-hydroxy-2-methyl-propionyl)-benzyl]phenyl}-2-methyl-1-propanone, 2-methyl-1-[4-(methylthio)phenyl]-2-morpholino-1-propanone, 2-(dimethylamino)-1-(4-morpholinophenyl)-2-benzyl-1-butanone, 2-(dimethylamino)-2-[(4-methylphenyl)methyl]-1-[4-(4-morpholinyl)phenyl]-1-butanone, oxy-phenyl-acetic acid 2-[2-oxo-2-phenyl-acetoxy-ethoxy]-ethyl ester, oxy-phenyl-acetic acid 2-[2-hydroxy-ethoxy]-ethyl ester, methyl benzoylformate, bis(2,4,6-trimethylbenzoyl)phenylphosphine oxide, 2,4,6-trimethylbenzoyldiphenylphosphine oxide, 2,4,6-trimethylbenzoyldiphenylphosphinic acid ester, 1-[4-(phenylthio)phenyl]-1,2-octanedione 2-(O-benzoyloxime), 1-[9-ethyl-6-(2-methylbenzoyl)-9H-carbazole-3-yl]-ethanone-1-(O-acetyloxime), and the like.

From the viewpoint of further reducing the in-plane retardation of the optical molded body, the photopolymerization initiator (C) preferably includes a hydroxyphenyl ketone-based initiator, and more preferably includes 1-hydroxycyclohexylphenyl ketone (for example, Omnirad 184, manufactured by IGM Resins B.V.).

From the viewpoint of improving the curability of the photocurable resin composition, in a case where the total content of the monofunctional (meth)acrylate monomer (A1) and the bifunctional or higher functional (meth)acrylate monomer (A2) is set to 100 parts by mass, the content of the photopolymerization initiator (C) in the photocurable resin composition according to the present embodiment is preferably 0.10 parts by mass or more, more preferably 0.50 parts by mass or more, still more preferably 1.0 part by mass or more, even still more preferably 2.0 parts by mass or more, and even still more preferably 3.0 parts by mass or more.

From the viewpoint of improving the uniformity of the thickness of the photocurable resin composition during curing, in a case where the total content of the monofunctional (meth)acrylate monomer (A1) and the bifunctional or higher functional (meth)acrylate monomer (A2) is set to 100 parts by mass, the content of the photopolymerization initiator (C) in the photocurable resin composition according to the present embodiment is preferably 10 parts by mass or less, more preferably 8.0 parts by mass or less, still more preferably 6.0 parts by mass or less, even still more preferably 5.0 parts by mass or less, and even still more preferably 4.5 parts by mass or less.

From the viewpoint of improving the curability of the photocurable resin composition and the viewpoint of improving the uniformity of the thickness of the photocurable resin composition during curing, in a case where the total content of the monofunctional (meth)acrylate monomer (A1) and the bifunctional or higher functional (meth)acrylate monomer (A2) is set to 100 parts by mass, the content of the photopolymerization initiator (C) in the photocurable resin composition according to the present embodiment is preferably 0.10 parts by mass or more and 10 parts by mass or less, more preferably 0.50 parts by mass or more and 8.0 parts by mass or less, still more preferably 1.0 part by mass or more and 6.0 parts by mass or less, even still more preferably 2.0 parts by mass or more and 5.0 parts by mass or less, and even still more preferably 3.0 parts by mass or more and 4.5 parts by mass or less.

From the viewpoint of further reducing the in-plane retardation of the optical molded body, the content of the photopolymerization initiator (C) in the photocurable resin composition of the present embodiment is preferably 0.10% by mass or more and 10% by mass or less, more preferably 1.0% by mass or more and 8.0% by mass or less, still more preferably 2.0% by mass or more and 6.0% by mass or less, even still more preferably 3.0% by mass or more and 5.0% by mass or less, and even still more preferably 3.5% by mass or more and 4.0% by mass or less in a case where the total amount of the solid contents in the photocurable resin composition (the total amount of components remaining as solid substances in a case of being cured into a cured product) is set to 100% by mass.

### <Light stabilizer (D)>

The photocurable resin composition of the present embodiment may further include a light stabilizer (D). The light stabilizer (D) is not particularly limited, and a known light stabilizer can be used. The photocurable resin composition can improve the coloring resistance by containing the light stabilizer (D).

From the viewpoint of further improving the coloring resistance, the light stabilizer (D) preferably includes a hindered amine-based light stabilizer.

Examples of the hindered amine-based light stabilizer include methacrylic acid (1,2,2,6,6-pentamethyl-piperidin-4-yl), decanedioic acid bis(2,2,6,6-tetramethyl-1(octyloxy)-4-piperidinyl) ester, a reaction product of 1,1-dimethylethyl hydroperoxide and octane (70% by mass), and polypropylene (30% by mass), bis(1,2,2,6,6-pentamethyl-4-piperidyl) [[3,5-bis(1,1-dimethylethyl)-4-hydroxyphenyl]methyl]butylmalonate, a mixture of bis(1,2,2,6,6-pentamethyl-4-piperidyl)sebacate and methyl-1,2,2,6,6-pentamethyl-4-piperidyl sebacate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, a mixture of 2,2,6,6-tetramethyl-4-piperidyl-1,2,3,4-butanetetracarboxylate and tridecyl-1,2,3,4-butanetetracarboxylate, and a mixture of 1,2,2,6,6-pentamethyl-4-piperidyl-1,2,3,4-butanetetracarboxylate and tridecyl-1,2,3,4-butanetetracarboxylate.

From the viewpoint of further improving the coloring resistance, the light stabilizer (D) preferably includes 1,2,2,6,6-pentamethyl-4-piperidyl methacrylate (for example, ADEKA STAB LA-82, manufactured by ADEKA Corporation).

From the viewpoint of improving the coloring resistance of the optical molded body, in a case where the total amount of solid contents in the photocurable resin composition (the total amount of components remaining as solid substances in a case of being cured into a cured product) is set to 100% by mass, the content of the light stabilizer (D) in the photocurable resin composition according to the present embodiment is preferably 0.0010% by mass or more, more preferably 0.0050% by mass or more, still more preferably 0.010% by mass or more, even still more preferably 0.050% by mass or more, and even still more preferably 0.090% by mass or more.

From the viewpoint of reducing the bleeding-out, in a case where the total amount of solid contents in the photocurable resin composition (the total amount of components remaining as solid substances in a case of being cured into a cured product) is set to 100% by mass, the content of the light stabilizer (D) in the photocurable resin composition according to the present embodiment is preferably 1.00% by mass or less, more preferably 0.60% by mass or less, still more preferably 0.50% by mass or less, even still more preferably 0.40% by mass or less, and even still more preferably 0.30% by mass or less.

From the viewpoint of improving the coloring resistance of the optical molded body and the viewpoint of reducing the bleeding-out, in a case where the total amount of solid contents in the photocurable resin composition (the total amount of components remaining as solid substances in a case of being cured into a cured product) is set to 100% by mass, the content of the light stabilizer (D) in the photocurable resin composition according to the present embodiment is preferably 0.0010% by mass or more and 1.00% by mass or less, more preferably 0.0050% by mass or more and 0.60% by mass or less, still more preferably 0.010% by mass or more and 0.50% by mass or less, even still more preferably 0.050% by mass or more and 0.40% by mass or less, and even still more preferably 0.090% by mass or more and 0.30% by mass or less.

### <Other components>

The photocurable resin composition may contain one or two or more selected from the group consisting of a filling agent, a curing accelerator, a plasticizer, a heat stabilizer, a flame retardant, an antistatic agent, an antifoaming agent, a silane coupling agent, an ultraviolet absorber, a surfactant, and a leveling agent, as specific examples of other components other than the polymerizable compound (for example, the monofunctional (meth)acrylate monomer (A1) and the bifunctional or higher functional (meth)acrylate monomer (A2)), the antioxidant (B), the photopolymerization initiator (C), and the light stabilizer (D) .

### <Method for manufacturing photocurable resin composition>

The photocurable resin composition according to the present embodiment can be obtained by mixing the polymerizable compound (for example, the monofunctional (meth)acrylate monomer (A1) and the bifunctional or higher functional (meth)acrylate monomer (A2)) and other components such as the antioxidant (B), the photopolymerization initiator (C), or the light stabilizer (D) as necessary, by a known method in the related art.

### <Physical properties of photocurable resin composition>

Next, the physical properties of the photocurable resin composition will be described.

The in-plane retardation Re, measured in a cured film produced using the photocurable resin composition according to the present embodiment according to the following <cured film preparation conditions> and measured according to the following <measurement of in-plane retardation Re>, will be described.

From the viewpoint of further reducing the in-plane retardation of the optical molded body, the in-plane retardation Re of the photocurable resin composition according to the present embodiment is preferably 50.0 nm or less, more preferably 40.0 nm or less, still more preferably 35.0 nm or less, even still more preferably 30.0 nm or less, even still more preferably 25.0 nm or less, even still more preferably 23.0 nm or less, even still more preferably 20.0 nm or less, even still more preferably 15.0 nm or less, even still more preferably 12.0 nm or less, even still more preferably 10.0 nm or less, even still more preferably 8.0 nm or less, even still more preferably 6.0 nm or less, and even still more preferably 5.0 nm or less.

The lower limit of the in-plane retardation Re of the photocurable resin composition according to the present embodiment is not particularly limited, but is, for example, 0.00 nm or more, and may be 0.10 nm or more, 0.50 nm or more, 1.0 nm or more, 2.0 nm or more, or 3.0 nm or more.

From the viewpoint of further reducing the in-plane retardation of the optical molded body, the in-plane retardation Re of the photocurable resin composition according to the present embodiment is preferably 0.00 nm or more and 50.0 nm or less, more preferably 0.00 nm or more and 40.0 nm or less, still more preferably 0.00 nm or more and 35.0 nm or less, even still more preferably 0.00 nm or more and 30.0 nm or less, even still more preferably 0.00 nm or more and 25.0 nm or less, even still more preferably 0.00 nm or more and 23.0 nm or less, even still more preferably 0.00 nm or more and 20.0 nm or less, even still more preferably 0.00 nm or more and 15.0 nm or less, even still more preferably 0.00 nm or more and 12.0 nm or less, even still more preferably 0.00 nm or more and 10.0 nm or less, even still more preferably 0.00 nm or more and 8.0 nm or less, even still more preferably 0.00 nm or more and 6.0 nm or less, and even still more preferably 0.00 nm or more and 5.0 nm or less.

### <Cured film preparation conditions>

A 3 mm-thick silicone sheet (material: silicone rubber, hardness: 50 degrees) having a size of 50 mm × 50 mm and a circular hole with a diameter of 35 mmφ is placed on a 0.7 mm-thick alkali-free glass having a size of 50 mm × 50 mm, the circular hole portion is filled with the photocurable resin composition, a 0.7 mm-thick alkali-free glass having a size of 50 mm × 50 mm is further placed thereon, the laminate is placed on a stainless-steel lab jack and the height is adjusted, the photocurable resin composition is irradiated with LED light having a wavelength of 405 nm for 3 minutes under a condition of 810 mW from above the alkali-free glass, the laminate is turned over, and then the photocurable resin composition is irradiated with LED light having a wavelength of 405 nm for 3 minutes under a condition of 810 mW. After the irradiation with the LED light, the laminate is allowed to cool at 23°C for 30 minutes, and a cured product of the photocurable resin composition is released from the alkali-free glass and the silicone sheet to obtain a cured film of the photocurable resin composition.

Here, more specific preparation conditions of the cured film of the photocurable resin composition according to the present embodiment can be adopted, for example, conditions described in Examples.

### <Measurement of in-plane retardation Re>

With respect to the cured film, the in-plane retardation Re at a position of 10.0 mm from a center of the cured film is measured in an atmosphere at an ambient temperature of 23°C by a two-dimensional birefringence evaluation device 1 hour after the LED light irradiation is completed.

Here, in the present embodiment, the measurement of the in-plane retardation Re can be more specifically performed according to the method described in Examples.

Next, the cured film prepared using the photocurable resin composition according to the present embodiment according to the <cured film preparation conditions> is subjected to the following <heat treatment>, and an in-plane retardation Re after heating, measured according to the following <measurement of in-plane retardation Re after heat treatment>, will be described.

From the viewpoint of further reducing the in-plane retardation of the optical molded body, the in-plane retardation Re after heating of the photocurable resin composition according to the present embodiment is preferably 16.0 nm or less, more preferably 13.0 nm or less, still more preferably 10.0 nm or less, even still more preferably 8.0 nm or less, even still more preferably 6.0 nm or less, even still more preferably 5.0 nm or less, even still more preferably 4.0 nm or less, even still more preferably 3.5 nm or less, even still more preferably 3.0 nm or less, and even still more preferably 2.5 nm or less.

The lower limit of the in-plane retardation Re after heating of the photocurable resin composition according to the present embodiment is not particularly limited, but is, for example, 0.00 nm or more, and may be 0.10 nm or more, 0.50 nm or more, 1.0 nm or more, 2.0 nm or more, or 3.0 nm or more.

From the viewpoint of further reducing the in-plane retardation of the optical molded body, the in-plane retardation Re after heating of the photocurable resin composition according to the present embodiment is preferably 0.00 nm or more and 16.0 nm or less, more preferably 0.00 nm or more and 13.0 nm or less, still more preferably 0.00 nm or more and 10.0 nm or less, even still more preferably 0.00 nm or more and 8.0 nm or less, even still more preferably 0.00 nm or more and 6.0 nm or less, even still more preferably 0.00 nm or more and 5.0 nm or less, even still more preferably 0.00 nm or more and 4.0 nm or less, even still more preferably 0.00 nm or more and 3.5 nm or less, even still more preferably 0.00 nm or more and 3.0 nm or less, and even still more preferably 0.00 nm or more and 2.5 nm or less.

### <Heat treatment>

The cured film is heated from 23°C to 120°C at a constant rate for 1 hour, heated at 120°C for 1 hour, cooled from 120°C to 23°C at a constant rate for 3 hours, and further allowed to cool at 23°C for 3 hours.

### <Measurement of in-plane retardation Re after heat treatment>

With respect to the cured film, the in-plane retardation Re at a position of 10.0 mm from a center of the cured film is measured in an atmosphere at an ambient temperature of 23°C by a two-dimensional birefringence evaluation device 1 hour after the <heat treatment> is completed.

### <Uses of photocurable resin composition>

Next, the uses of the photocurable resin composition will be described.

Since the photocurable resin composition of the present embodiment can reduce the in-plane retardation of the optical molded body produced by molding from the photocurable resin composition, the photocurable resin composition can be used in a method for forming an optical molded body, such as an injection molding method, a compression molding method, an injection compression molding method, an extrusion molding method, a solution casting method, and a casting method. In particular, the photocurable resin composition according to the present embodiment can be used in a casting method.

Since the photocurable resin composition of the present embodiment can reduce the in-plane retardation of the optical molded body produced by molding from the photocurable resin composition, the use of the optical molded body produced by molding from the photocurable resin composition is not particularly limited, and the photocurable resin composition can be used for various uses.

The photocurable resin composition of the present embodiment can be used, for example, preferably for a lens. The lens includes, for example, one or two or more selected from the group consisting of a spherical lens, an aspherical lens, a biconvex lens, a plano-convex lens, a convex meniscus lens, a biconcave lens, a plano-concave lens, and a concave meniscus lens.

The photocurable resin composition of the present embodiment can be used, for example, more preferably for one or two or more lenses selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The photocurable resin composition of the present embodiment can be used, for example, preferably for a cover for a display (hereinafter, also referred to as a cover display). The cover display includes, for example, one or two or more selected from the group consisting of a front surface cover display and a full-surface cover display.

The photocurable resin composition of the present embodiment can be used, for example, more preferably for one or two or more cover displays selected from the group consisting of a cover display for a virtual reality device (cover display for a VR device), a cover display for a mixed reality device (cover display for an MR device), a cover display for an augmented reality device (cover display for an AR device), a cover display for a cross-reality device (cover display for an xR device), and a cover display for a head-mounted display (cover display for an HMD).

### (Cured product)

The cured product according to the present embodiment is a cured product of the photocurable resin composition according to the present embodiment. The cured product according to the present embodiment can be produced, for example, by irradiating the photocurable resin composition according to the present embodiment with LED light to cure the photocurable resin composition. As more specific preparation conditions of the cured product according to the present embodiment, for example, the conditions described in Examples can be adopted.

### (Optical molded body)

The optical molded body according to the present embodiment includes the cured product of the photocurable resin composition according to the present embodiment. The optical molded body according to the present embodiment can be produced using the photocurable resin composition according to the present embodiment. The optical molded body can be manufactured from the photocurable resin composition of the present embodiment by any method such as an injection molding method, a compression molding method, an injection compression molding method, an extrusion molding method, a solution casting method, and a casting method.

The optical molded body according to the present embodiment includes a lens. The lens includes, for example, one or two or more selected from the group consisting of a spherical lens, an aspherical lens, a biconvex lens, a plano-convex lens, a convex meniscus lens, a biconcave lens, a plano-concave lens, and a concave meniscus lens.

The lens of the present embodiment includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The optical molded body of the present embodiment includes a cover for a display (cover display). The cover display includes, for example, one or two or more selected from the group consisting of a front surface cover display and a full-surface cover display.

The cover display of the present embodiment includes one or two or more selected from the group consisting of a cover display for a virtual reality device (cover display for a VR device), a cover display for a mixed reality device (cover display for an MR device), a cover display for an augmented reality device (cover display for an AR device), a cover display for a cross-reality device (cover display for an xR device), and a cover display for a head-mounted display (cover display for an HMD) .

The maximum thickness portion of the optical molded body is a portion of the optical molded body where the thickness of the optical member is maximum. The position of the maximum thickness portion of the optical molded body is not particularly limited, and can be appropriately set according to the uses and the like.

For example, in the optical molded body of the present embodiment, the maximum thickness portion is preferably 1.0 mm or more, the maximum thickness portion is more preferably 1.1 mm or more, the maximum thickness portion is still more preferably 1.2 mm or more, the maximum thickness portion is even still more preferably 1.5 mm or more, the maximum thickness portion is even still more preferably 2.0 mm or more, the maximum thickness portion is even still more preferably 3.0 mm or more, the maximum thickness portion is even still more preferably 4.0 mm or more, and the maximum thickness portion is even still more preferably 5.0 mm or more.

For example, in the optical molded body of the present embodiment, the maximum thickness portion is preferably 20.0 mm or less, the maximum thickness portion is more preferably 19.9 mm or less, the maximum thickness portion is still more preferably 19.8 mm or less, the maximum thickness portion is even still more preferably 19.5 mm or less, the maximum thickness portion is even still more preferably 18.0 mm or less, the maximum thickness portion is even still more preferably 17.0 mm or less, the maximum thickness portion is even still more preferably 16.0 mm or less, and the maximum thickness portion is even still more preferably 15.0 mm or less.

For example, in the optical molded body of the present embodiment, the maximum thickness portion is preferably 1.0 mm or more and 20.0 mm or less, the maximum thickness portion is more preferably 1.1 mm or more and 19.9 mm or less, the maximum thickness portion is still more preferably 1.2 mm or more and 19.8 mm or less, the maximum thickness portion is even still more preferably 1.5 mm or more and 19.5 mm or less, the maximum thickness portion is even still more preferably 2.0 mm or more and 19.0 mm or less, the maximum thickness portion is even still more preferably 3.0 mm or more and 18.0 mm or less, the maximum thickness portion is even still more preferably 4.0 mm or more and 17.0 mm or less, the maximum thickness portion is even still more preferably 5.0 mm or more and 16.0 mm or less, and the maximum thickness portion is even still more preferably 5.0 mm or more and 15.0 mm or less.

The photocurable resin composition of the present embodiment can reduce the in-plane retardation of the optical molded body, and thus can also be applied to an optical molded body having a thickness of 1.0 mm or more.

### (Optical device)

The optical device according to the present embodiment includes the optical molded body according to the present embodiment. The type of the optical device of the present embodiment is not particularly limited. Examples of the optical device of the present embodiment include a virtual reality device (VR device), a mixed reality device (MR device), an augmented reality device (AR device), a cross-reality device (xR device), and a head-mounted display (HMD device).

The embodiments according to the present invention have been described above. However, these are examples of the present invention, and various configurations other than the above can be adopted.

In addition, the present invention is not limited to the above-described embodiments, and modifications, improvements, and the like within a range that does not impair the effects of the present invention are included in the present invention. Examples

Hereinafter, the present embodiment will be described in detail with reference to Examples and the like. The present embodiment is not at all limited to the descriptions in these examples.

First, the materials used in each example are shown.

### · Polymerizable compound: (meth)acrylate monomer (A)

Monofunctional (meth)acrylate monomer (A1): GM81HDA (dicyclopentanyl methacrylate, manufactured by Qualipoly Chemical Corporation)
Bifunctional or higher functional (meth)acrylate monomer (A2)1: DDD (1,12-dodecanediol dimethacrylate, manufactured by Shin-Nakamura Chemical Co., Ltd.)
Bifunctional or higher functional (meth)acrylate monomer (A2)2: DCP (tricyclodecane dimethanol dimethacrylate, manufactured by Shin-Nakamura Chemical Co., Ltd.)
Bifunctional or higher functional (meth)acrylate monomer (A2)3: GM82R2E (2,2-bis[4-[2-(methacryloyloxy)ethoxy]phenyl]propane, manufactured by Qualipoly Chemical Corporation)

### · Antioxidant (B)

Antioxidant 1: thioether-based antioxidant (bis[3-(dodecylthio)propionic acid]2,2-bis[[3-(dodecylthio)-1-oxopropyloxy]methyl]-1,3-propanediyl, manufactured by ADEKA Corporation, product name: ADEKA STAB AO-412S) (hereinafter, also referred to as AO-412S)
Antioxidant 2: phenol-based antioxidant (pentaerythritol tetrakis[3-(3,5-di-tert-butyl-4-hydroxyphenyl)propionate], manufactured by ADEKA Corporation, product name: ADEKA STAB AO-60) (hereinafter, also referred to as AO-60)

### · Photopolymerization initiator (C)

Photopolymerization initiator 1: photoradical polymerization initiator (1-hydroxycyclohexyl phenyl ketone, manufactured by IGM Resins B.V., product name: Omnirad 184)

### · Light stabilizer (D)

Light stabilizer 1: hindered amine-based light stabilizer (methacrylic acid 1,2,2,6,6-pentamethyl-4-piperidyl, manufactured by ADEKA Corporation, product name: ADEKA STAB LA-82) (hereinafter, also referred to as LA-82)

### (Examples 1 to 3, Comparative Example 1)

Each component was blended to have the blending composition shown in Table 1, thereby obtaining a liquid photocurable resin composition. The unit of the blending composition in Table 1 is parts by mass.

Physical properties of the optical molded body obtained from the photocurable resin composition of each example were measured by the following methods. The measurement results are shown in Table 1.

### <Measurement of in-plane retardation Re>

The in-plane retardation Re, measured in a cured film produced using the photocurable resin composition of each example according to the following <cured film preparation conditions> and measured according to the following <measurement of in-plane retardation Re>, was measured.

### <Cured film preparation conditions>

A 3 mm-thick silicone sheet (material: silicone rubber, hardness: 50 degrees) having a circular hole with a diameter of 35 mmφ and a size of 50 mm × 50 mm was placed on a 0.7 mm-thick alkali-free glass (product name: JIS R 3202, glass plate surface, manufactured by Testpiece Co., Ltd.) having a size of 50 mm × 50 mm. The circular hole portion of the silicone sheet was filled with the photocurable resin composition, and then a 0.7 mm-thick alkali-free glass (product name: JIS R 3202, glass plate surface, manufactured by Testpiece Co., Ltd.) having a size of 50 mm × 50 mm was further placed thereon. At this time, it was confirmed that no air bubbles were present. Hereinafter, a laminate in which a silicone sheet is placed on the above-described alkali-free glass, the circular hole portion of the silicone sheet is filled with a photocurable resin composition, and then an alkali-free glass is further placed thereon may be referred to as a laminate.

The obtained laminate was placed on a stainless-steel lab jack to adjust the height, and using an LED light irradiation device (manufactured by CCS, Inc., product name: 405 nm-120 mm air-cooled batch type irradiation device, model number: HLDL-120505-NWPS), the photocurable resin composition was irradiated with LED light having a wavelength of 405 nm for 3 minutes under a condition of 810 mW from above the alkali-free glass. Thereafter, the laminate was turned over, and irradiated with LED light having a wavelength of 405 nm for 3 minutes under a condition of 810 mW. After the irradiation with LED light, the laminate was allowed to cool at 23°C for 30 minutes. After cooling, the cured product of the photocurable resin composition was released from the alkali-free glass and the silicone sheet to obtain a cured film of the photocurable resin composition.

The irradiation intensity of the LED light was measured using an ultraviolet integrating actinometer (product name: UIT-250, manufactured by Ushio Inc.).

### <Measurement of in-plane retardation Re>

For the cured film of each example, 1 hour after the completion of the LED light irradiation, the in-plane retardation Re at 10.0 mm from the center of the cured film was measured using a two-dimensional birefringence evaluation device in an atmosphere at an ambient temperature of 23°C, in accordance with the following <measurement conditions of in-plane retardation Re> and the following <measurement steps>.

### <Measurement conditions of in-plane retardation Re>

· Device: two-dimensional birefringence evaluation device (product name: WPA-200, manufactured by Photonic Lattice, Inc.)
· Analysis software: WPA-view
· Measurement temperature: 23°C
· Atmospheric pressure: atmospheric pressure
· Selection area: within a range of a radius of 17.5 mm from the center of the cured film
· Analysis area: within a range of a radius of 10.0 mm from the center of the cured film
· Measurement field of view: 30 mm × 40 mm
· Number of birefringent pixels: 384 × 288 pixels
· Lens: standard lens (f1.25)
· User setting
Automatic exposure adjustment: automatic exposure adjustment is performed during measurement
Noise filter: automatically applied
Mask processing for dark region: mask processing is performed (10.0%)
Setting of axial direction: slow axis
Measurement accuracy: high accuracy
Measurement mode: three-wavelength measurement
Measurement wavelength: 523 nm, 543 nm, 575 nm
Material coefficient: automatic

### <Measurement step>

(S1) The power of the device is turned on, the software (WPA-view) is started, and then the device is left to stand for at least 30 minutes to be stabilized.

(S2) After the cured film is disposed on the light source stage, the cured film is accommodated in an area in which the light source stage is shown in the camera preview window while adjusting the height of the camera unit. In this case, the cured film is prevented from floating from the light source stage. In addition, it is visually confirmed that no external light is reflected on the preview window.

(S3) The cured film is focused while rotating the dial of the lens. In the measurement of the cured film, the scale of the dial is set to "4".

(S4) In the user setting, the above-described conditions are set. Next, the cured film is temporarily removed, and then the baseline is measured. The measurement of the baseline is performed for each cured film.

(S5) The cured film is disposed again, and then the measurement is performed.

(S6) On the analysis screen, the above-described selection area is adjusted to be within the measurement field of view, and then the in-plane retardation Re and the like are measured.

### <Measurement of in-plane retardation Re after heating>

The cured film prepared according to the above-described <cured film preparation conditions> using the photocurable resin composition is subjected to the following <heat treatment>. For the cured film of each example after the following <heat treatment>, the in-plane retardation Re after heating was measured according to the following <measurement of in-plane retardation Re after heat treatment>.

The heating of the cured film of each example is started after 1 hour or more and within 3 hours after the preparation of the cured film of each example.

### <Heat treatment>

The cured film is heated from 23°C to 120°C at a constant rate for 1 hour, heated at 120°C for 1 hour, cooled from 120°C to 23°C at a constant rate for 3 hours, and further allowed to cool at 23°C for 3 hours.

### <Measurement of in-plane retardation Re after heat treatment>

With respect to the cured film, the in-plane retardation Re at a position of 10.0 mm from a center of the cured film is measured in an atmosphere at an ambient temperature of 23°C by a two-dimensional birefringence evaluation device 1 hour after the <heat treatment> is completed.

### [Table 1]

**Table 1**

| | | | | | Example 1 | Example 2 | Example 3 | Comparative Example 1 |
|---|---|---|---|---|---|---|---|---|
| Blending composition | (Meth) acrylate monomer | Monofunctional | Alicyclic | GM81HDA | 80 | 70 | 0 | 0 |
| | | Bifunctional or higher functional | Linear | DDD | 20 | 0 | 0 | 50 |
| | | | Alicyclic | DCP | 0 | 30 | 100 | 0 |
| | | | Branched chain aromatic ring | GM82R2E | 0 | 0 | 0 | 50 |
| | Antioxidant | | | AO-412S | 0.50 | 0.50 | 0.50 | 0.50 |
| | | | | AO-60 | 0.50 | 0.50 | 0.50 | 0.50 |
| | Photopolymerization initiator | | | Omnirad 184 | 4.0 | 4.0 | 4.0 | 4.0 |
| | Light stabilizer | | | LA-82 | 0.10 | 0.10 | 0.10 | 0.10 |
| Physical property | In-plane retardation Re (before heating) [nm] | | | | 4.61 | 4.49 | 23.54 | 52.82 |
| | In-plane retardation Re after heating [nm] | | | | 2.12 | 3.42 | 5.76 | 24.37 |

Priority is claimed on Japanese Patent Application No. 2024-012864, filed January 31, 2024, the entire disclosure of which is incorporated herein by reference.

## Claims

1. A photocurable resin composition capable of being used for an optical molded body, the photocurable resin composition comprising:
a bifunctional or higher functional (meth)acrylate monomer, which includes one or two or more selected from the group consisting of an alicyclic bifunctional (meth)acrylate monomer and a linear bifunctional (meth)acrylate monomer,
wherein, in a case where a total content of the bifunctional or higher functional (meth)acrylate monomer is set to 100 parts by mass, a total content of the alicyclic bifunctional (meth)acrylate monomer and the linear bifunctional (meth)acrylate monomer is 60 parts by mass or more and 100 parts by mass or less.

2. The photocurable resin composition according to Claim 1, further comprising:
one or two or more selected from the group consisting of a monofunctional (meth)acrylate monomer and the bifunctional or higher functional (meth)acrylate monomer,
wherein, in a case where a total content of the monofunctional (meth)acrylate monomer and the bifunctional or higher functional (meth)acrylate monomer is set to 100 parts by mass, a content of the bifunctional or higher functional (meth)acrylate monomer is 5.0 parts by mass or more and 90 parts by mass or less.

3. The photocurable resin composition according to Claim 2, further comprising the monofunctional (meth)acrylate monomer.

4. The photocurable resin composition according to Claim 2 or 3,
wherein the monofunctional (meth)acrylate monomer has an alicyclic skeleton.

5. The photocurable resin composition according to any one of Claims 1 to 4,
wherein an in-plane retardation Re, measured in a cured film produced using the photocurable resin composition according to the following <cured film preparation conditions> and measured according to the following <measurement of in-plane retardation Re> is 50.0 nm or less.
<Cured film preparation conditions>
A 3 mm-thick silicone sheet (material: silicone rubber, hardness: 50 degrees) having a size of 50 mm × 50 mm and a circular hole with a diameter of 35 mmφ is placed on a 0.7 mm-thick alkali-free glass having a size of 50 mm × 50 mm, the circular hole portion is filled with the photocurable resin composition, a 0.7 mm-thick alkali-free glass having a size of 50 mm × 50 mm is further placed thereon, the laminate is placed on a stainless-steel lab jack and the height is adjusted, the photocurable resin composition is irradiated with LED light having a wavelength of 405 nm for 3 minutes under a condition of 810 mW from above the alkali-free glass, the laminate is turned over, the photocurable resin composition is irradiated with LED light having a wavelength of 405 nm for 3 minutes under a condition of 810 mW, the laminate is allowed to cool at 23°C for 30 minutes, and a cured product of the photocurable resin composition is released from the alkali-free glass and the silicone sheet to obtain a cured film of the photocurable resin composition.
<Measurement of in-plane retardation Re>
With respect to the cured film, the in-plane retardation Re at a position of 10.0 mm from a center of the cured film is measured in an atmosphere at an ambient temperature of 23°C by a two-dimensional birefringence evaluation device 1 hour after the LED light irradiation is completed.

6. The photocurable resin composition according to any one of Claims 1 to 5,
wherein a cured film prepared using the photocurable resin composition according to the following <cured film preparation conditions> is subjected to the following <heat treatment>, and an in-plane retardation Re after heating, measured according to the following <measurement of in-plane retardation Re after heat treatment>, is 16.0 nm or less.
<Cured film preparation conditions>
A 3 mm-thick silicone sheet (material: silicone rubber, hardness: 50 degrees) having a size of 50 mm × 50 mm and a circular hole with a diameter of 35 mmφ is placed on a 0.7 mm-thick alkali-free glass having a size of 50 mm × 50 mm, the circular hole portion is filled with the photocurable resin composition, a 0.7 mm-thick alkali-free glass having a size of 50 mm × 50 mm is further placed thereon, the laminate is placed on a stainless-steel lab jack and the height is adjusted, the photocurable resin composition is irradiated with LED light having a wavelength of 405 nm for 3 minutes under a condition of 810 mW from above the alkali-free glass, the laminate is turned over, the photocurable resin composition is irradiated with LED light having a wavelength of 405 nm for 3 minutes under a condition of 810 mW, the laminate is allowed to cool at 23°C for 30 minutes, and a cured product of the photocurable resin composition is released from the alkali-free glass and the silicone sheet to obtain a cured film of the photocurable resin composition.
<Heat treatment>
The cured film is heated from 23°C to 120°C at a constant rate for 1 hour, heated at 120°C for 1 hour, cooled from 120°C to 23°C at a constant rate for 3 hours, and further allowed to cool at 23°C for 3 hours.
<Measurement of in-plane retardation Re after heat treatment>
With respect to the cured film, the in-plane retardation Re at a position of 10.0 mm from a center of the cured film is measured in an atmosphere at an ambient temperature of 23°C by a two-dimensional birefringence evaluation device 1 hour after the <heat treatment> is completed.

7. The photocurable resin composition according to any one of Claims 1 to 6, further comprising an antioxidant.

8. The photocurable resin composition according to any one of Claims 1 to 7, further comprising a photopolymerization initiator.

9. The photocurable resin composition according to Claim 8,
wherein the photopolymerization initiator includes a photoradical polymerization initiator.

10. The photocurable resin composition according to any one of Claims 1 to 9, further comprising a light stabilizer.

11. The photocurable resin composition according to any one of Claims 1 to 10,
wherein the photocurable resin composition is capable of being used in a casting method.

12. The photocurable resin composition according to any one of Claims 1 to 11,
wherein the photocurable resin composition is capable of being used for one or two or more lenses selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

13. A cured product of the photocurable resin composition according to any one of Claims 1 to 12.

14. An optical molded body comprising a cured product of the photocurable resin composition according to any one of Claims 1 to 12.

15. The optical molded body according to Claim 14,
wherein the optical molded body includes a lens.

16. The optical molded body according to Claim 15,
wherein the lens includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

17. The optical molded body according to any one of Claims 14 to 16,
wherein a maximum thickness portion is 20.0 mm or less.

18. The optical molded body according to any one of Claims 14 to 17,
wherein a maximum thickness portion is 1.0 mm or more.

19. An optical device comprising the optical molded body according to any one of Claims 14 to 18.
